# EUROPEAN PATENT SPECIFICATION

(11) **EP 0 993 058 B1**
(45) Date of publication and mention of the grant of the patent: **17.08.2005**
(21) Application number: 99119454.9
(22) Date of filing: 30.09.1999
(51) Int. Cl.: H01M 4/50, H01M 10/40

(54) **Lithium secondary battery**
Lithium-Sekundärbatterie
Pile secondaire au lithium

(30) Priority: 01.10.1998 JP 29455998
(43) Date of publication of application: 12.04.2000
(73) Proprietor: NGK INSULATORS, LTD., Nagoya-City, Aichi Prefecture 467-8530 (JP)
(72) Inventor: Nemoto, Hiroshi, Nagoya-city, Aichi-pref.,457-0022 (JP); Kitoh, Kenshin, Nagoya-city, Aichi-pref., 458-0830 (JP)
(74) Representative: TBK-Patent

(56) References cited:
- EP-A- 0 734 085
- GB-A- 2 328 684

## Description

### Background of the Invention and Related Art Statement

The present invention relates to a lithium secondary battery wherein the particle shape of the positive electrode active material is controlled, thereby the resistance of the positive electrode active material and accordingly the internal resistance of the battery are made low, and resultantly discharge in large current has been made possible.

In recent years, portable type electronic appliances such as portable telephone, VTR, notebook type computer and the like have become increasingly small and light. In these portable type electronic appliances, there have come to be used, as the battery as electric source, secondary batteries wherein the active material of the positive electrode is a lithium transition metal compound oxide, the active material of the negative electrode is a carbon material, and the electrolyte solution is an organic electrolyte solution obtained by dissolving a Li ion electrolyte in an organic solvent.

Such batteries are generally called lithium secondary battery or lithium ion battery. Having a large energy density and a high single-battery voltage of about 4 V, lithium secondary battery is drawing attention not only as an electric source for the above-mentioned portable type electronic appliances but also as an electric source for driving the motor of electric vehicle (EV) or hybrid electric vehicle (HEV) (wide use of EV and HEV as a vehicle low in harmful exhaust gas emission is in active investigation, in the midst of recent movement for environmental protection).

In order to drive the motor of EV or the like, a voltage of at least 100 V, preferably at least 200 V is essential. Meanwhile, the voltage of single lithium secondary battery is determined by the materials constituting the battery and is at best about 4.2 V in terms of open-circuit voltage and about 3 to 4 V in terms of actual discharge voltage; therefore, it is necessary to use lithium secondary battery by connecting a plurality of single batteries in series.

Further, lithium secondary battery, when used in EV or the like, is required to have a large capacity and a high output so as to produce a desired acceleration, a slope-climbing property, etc. For example, when used in HEV where the motor assists the output during acceleration, lithium secondary battery is required to have a high output for driving the motor. This high output means that a large current flows. A large current of 100 A or more flows often and, in some cases, a current as large as 500 A flows in a short period of time. Since a plurality of single batteries are connected in series as mentioned above, the same current flows through individual single batteries.

Furthermore, lithium secondary battery, when used in EV or the like, is required to be low in the capacity loss caused by the Joule's heat, etc. generated during discharge, in order for the battery to be able to give a long running distance per one charge at a certain capacity. It is also important that lithium secondary battery is low in the decrease in battery capacity caused by repeated charge and discharge and thereby maintains the long-term reliability (i.e. repeated cycle property) at a satisfactory level.

In order to supply a large current stably or to reduce the capacity loss during charge and discharge, it is necessary to allow a single battery to have a low internal resistance. A study on the resistances of the individual members of lithium secondary battery revealed that the resistance of the positive electrode active material occupies a large portion of the internal resistance of the battery. Hence, it was attempted to add, to the positive electrode active material, conductive particles such as acetylene black or the like for conductivity improvement and resultant reduction in internal resistance of battery. The reason therefor is that the positive electrode active material such as lithium cobalt oxide (LiCoO₂), lithium manganese oxide (LiMn₂O₄), lithium nickel oxide (LiNiO₂) or the like is a conductor having both lithium ion conductivity and electron conductivity but the electron conductivity is not sufficiently large.

When there is no acetylene black addition, the positive electrode active material has low particle-to-particle contact and the lithium secondary battery has a large internal resistance; the utilization of the positive electrode active material is low; overall, the battery shows low performance. It is apparent form this that addition of acetylene black contributes to reduction in internal resistance of battery and improvement in repeated cycle property of battery; however, the addition decreases the amount of the positive electrode active material used and gives a reduced battery capacity. Therefore, the amount of acetylene black added is appropriately determined in consideration of a plus effect of reduction in battery internal resistance and a minus effect of reduction in battery capacity.

In order to allow the positive electrode active material to have a high conductivity, it is preferred to lower the electrical resistance of the positive electrode active material per se and add acetylene black as an auxiliary agent for conductivity improvement.

It is generally thought that a positive electrode active material of higher crystallinity is higher in mobility of lithium ion (charged particle) and electron. Therefore, it is thought that by increasing the crystallinity of the positive electrode active material, the conductivity of the positive electrode active material can be made higher. The crystallinity of the positive electrode active material can be accurately examined by observing the morphology of the positive electrode active material using a SEM (scanning type electron microscope) although the crystallinity is difficult to examine by X-ray diffractometry (which is an ordinary means for crystallinity examination) from the peak position or width.

EP-A-0 734 085 describes a cathode active material for a nonaqueous electrolyte secondary battery, wherein the active material is a non-stoichiometric composite oxide of Li and Mn having a spinel-type structure.

### Summary of the Invention

In view of the above-mentioned problems of the prior art, the present invention aims at providing a lithium secondary battery of high output and large capacity by controlling the morphology of the positive electrode active material and reducing the resistance of the positive electrode active material per se.

According to the present invention, there is provided a lithium secondary battery comprising:
a positive electrode active material which is composed mainly of Li and Mn and has a cubic spinel structure, the primary particles of the positive electrode active material having a substantially octahedral shape mainly constituted by flat crystal faces, having a crystal structure and crystal size as defined in claim 1.

In the lithium secondary battery of the present invention, the primary particles of the positive electrode active material contain those primary particles in which at least one side of each flat crystal face has a length of preferably 1 µm or more; and the primary particles of the active material have an average particle diameter of 1 to 20 µm. Further, the positive electrode active material has a Li/Mn ratio of preferably larger than 0.5. The secondary particles formed by the primary particles having the above properties have the maximum particle diameter of preferably 50 µm or less. It is preferred to add, to the positive electrode active material of the present invention, acetylene black as a conductivity-improving agent as in conventional lithium secondary batteries. The lithium secondary battery of the present invention using such a positive electrode active material has a capacity of preferably 2 Ah or more. The present lithium secondary battery is suitably used as an electric source for driving the motor of electric vehicle or hybrid electric vehicle.

### Brief Description of the Drawings

Fig. 1 is a SEM photograph showing a morphology of the particles constituting the positive electrode active material preferably used in the lithium secondary battery of the present invention.
Fig. 2 is a SEM photograph showing a morphology of the particles constituting other positive electrode active material.
Fig. 3 is a SEM photograph showing a morphology of the particles constituting still other positive electrode active material.

### Detailed Description of Preferred Embodiment

Description is made first on the positive electrode active material used in the lithium secondary battery of the present invention.

As the positive electrode active material, there is used lithium manganese oxide (stoichiometric composition: LiMn₂O₄) composed mainly of Li and Mn and having a cubic spinel structure. However, the lithium manganese oxide used in the present lithium secondary battery is not restricted to lithium manganese oxide having the above stoichiometric composition; and it may be lithium manganese oxide wherein the amount of cation is short or excessive or the amount of oxygen ion is short or excessive. Lithium manganese oxide is inexpensive and a preferred material for general-purpose battery, and can provide a battery of high output density suitably used particularly as an electric source for driving the motor of electric vehicle or the like.

"Lithium manganese oxide composed mainly of Li and Mn" means that part of the Mn may be replaced by other element(s), for example, the cation of at least one kind of element selected from substitution elements M such as Li, Fe, Mn, Ni, Mg, Zn, B, Al, Co, Cr, Si, Ti, Sn, P, V, Sb, Nb, Ta, Mo, W and the like, or that the lithium manganese oxide may contain, for example, B, Mo or W as an additive.

Use of, in particular, lithium manganese oxide having a Li/Mn ratio of larger than 0.5 is preferred because the resulting lithium secondary battery has a lower internal resistance and gives a higher output than the case of using lithium manganese oxide of stoichiometric composition. Examples of lithium manganese oxide having a Li/Mn ratio of larger than 0.5 include lithium manganese oxide represented by Li(LixMn₂₋ₓ)O₄ (x is a substitution amount) wherein Mn is partially replaced by Li, and lithium manganese oxide represented by LiMₓMn₂₋ₓO₄ wherein Mn is partially replaced by M (a substitution element other than Li). Since the Li/Mn ratio of the former compound is (1+x)/(2-x) and the Li/Mn ratio of the latter compound is 1/(2-x), these Li/Mn ratios are inevitably larger than 0.5 when x>0.

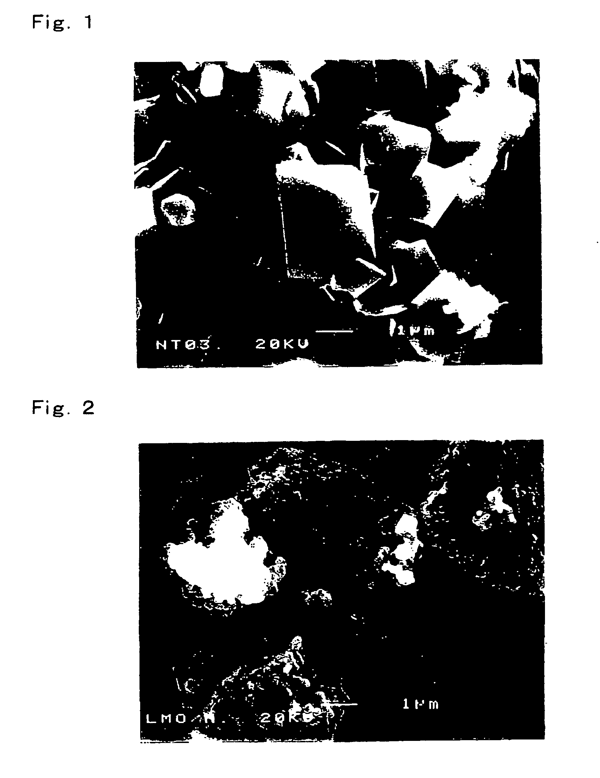

In the positive electrode active material having such a composition and a cubic spinel structure, the primary particles mostly have a substantially octahedral shape constituted mainly by flat crystal faces, as seen in Fig. 1 which is a SEM photograph showing a morphology of such primary particles. That is, flat crystal faces intersect with each other at the surface of each primary particle to form clear edge lines, and each primary particle has a shape close to the octahedron of cubic spinel structure.

The primary particles seen in Fig. 1 also include particles of other shapes, that is, (a) particles wherein the apex formed by intersection of four crystal faces of octahedron is not complete and is formed in the form of a plane or an edge, (b) particles wherein a different crystal face is formed at the edge formed by intersection of two crystal faces of octahedron, and (c) particles wherein one crystal face is jointly owned by two primary particles or wherein other primary particle grows from the surface of one primary particle. These primary particles do not have a completely octahedral shape but can be regarded as a substantially octahedral shape. In the present invention, the "substantially octahedral shape" include these various shapes and further include those polyhedrons formed by partial chipping of the above shapes or by joint possession of crystal face in complicated manner between two primary particles.

The positive electrode active material used in the present lithium secondary battery is characterized by consisting of primary particles mostly having the above-mentioned morphology. Thus, all the primary particles need not have a substantially octahedral shape. This can be understood also from the fact that the growth of crystal face is affected by, for example, the particle diameters of raw materials, the impurities in raw materials and the inside-furnace temperature distribution during synthesis and does not take place uniformly in some cases.

The positive electrode active material contains those primary particles wherein at least one side of each flat crystal face has a length of preferably 1 µm or more. The primary particles of the positive electrode active material have an average particle diameter of 1 to 20 µm. The secondary particles formed by the primary particles have the maximum particle diameter of preferably 50 µm or less. Further, the minimum particle diameter of the primary particles is preferably 0.05 µm or more, and the minimum particle diameter of the secondary particles is preferably 1 µm or more. The particle diameters of the primary particles are expressed as particle diameters obtained by the analysis of SEM image because the separation of individual particles and the particle diameter measurement for individual particles are impossible. The particle diameters of the secondary particles are values obtained by laser diffractometry or the like.

The above restrictions for particle diameters are necessary for the following reasons. In production of a lithium secondary battery using a positive electrode active material, the positive electrode active material is generally formed in a plate shape by press molding, or in a layer shape by adding, to a solvent, a binder, a positive electrode active material and a conductivity-improving agent to obtain a slurry and then coating the slurry on a metal foil. In this case, when the primary particles have an average particle diameter of smaller than 0.1 µm, the amount of the binder added must be increased; in production of a slurry, a deflocculant or a dispersing agent must be added to suppress the cohesion of the positive electrode active material and maintain good dispersion; as a result, the battery obtained has a low energy density. Further, the small particle diameters of the primary particles result in a battery of low current efficiency.

Meanwhile, when the particle diameter of the primary particles are large, neither sufficient filling density nor sufficient mechanical strength is obtained when press molding is employed. When a slurry is produced and coated on a substrate to form a layer, precipitation of particles tends to occur in the slurry and uniform coating of the slurry is impossible; when there is used a positive electrode active material comprising secondary particles having an average particle diameter of larger than 50 µm, two secondary particles are about equal to the thickness of the positive electrode active material layer formed (the thickness is about 100 µm or less), inviting low flatness, homogeneity and filling ratio.

It is not necessary that all the particles of the positive electrode active material satisfy the above-mentioned preferable particle diameter ranges. The positive electrode active material may contain primary particles or secondary particles having particle diameters outside the above-specified ranges, such as those formed by chipping, cohesion, etc. as long as the above-mentioned restrictions for particles diameters are satisfied and the amount of these particles is such a level as not ordinarily detected in the above-mentioned measurement methods for particle diameters.

Production of the positive electrode active material of the present invention is conducted by firing a raw material mixture consisting of given proportions of salts and/or oxides of various elements [including Li, Mn and, as necessary, a substitution element(s) and an addition element(s)], in an oxidizing atmosphere at 700 to 900°C for 5 to 50 hours.

When the firing (synthesis) temperature is low, growth of particles hardly takes place, making it difficult to obtain a positive electrode active material constituted by primary particles having intended particle diameters and an intended shape. Meanwhile, when the firing temperature is high, large primary particles are formed but, simultaneously therewith, neck growth starts between primary particles and each neck portion becomes roundish; as a result, it is impossible to obtain particles having intended particle diameters and an intended shape. In fact, when it is intended to produce primary particles having particle diameters of 20 µm or more, it is impossible to obtain primary particles of substantially octahedral shape owing to the neck growth. The positive electrode active material must be used in the form of a powder; therefore, if there is neck growth (i.e. sintering), grinding must be conducted after the firing (synthesis), which is a disadvantage. Further, the firing at high temperature may convert the cubic system into other crystal phase.

Thus, by selecting the composition of raw materials and the firing conditions appropriately, it is possible to control the average particle diameter of the primary particles obtained and the morphology of the primary particles. For example, in the positive electrode active material (B₂O₃ was added) of Comparative Example 2 described later, striking particle growth is observed and the primary particles are roundish as a whole. In this case, primary particles having a substantially octahedral shape can be obtained by lowering the synthesis temperature and/or shortening the synthesis time to suppress the particle growth.

As to the kinds of the materials other than the positive electrode active material, used in production of the lithium secondary battery of the present invention, there is no particular restriction and various known materials can be used. For example, as the negative electrode active material, there can be used an amorphous carbon material (e.g. soft carbon or hard carbon), a highly graphitized carbon material (e.g. artificial graphite or natural graphite) or the like. As the separator, there can preferably be used a separator obtained by sandwiching a microporous polyethylene film capable of transmitting lithium ion between two same porous polypropylene film capable of transmitting lithium ion, to form a three-layered structure.

As the organic electrolyte solution, there can be used an organic electrolyte solution obtained by dissolving, in a single or mixed solvent selected from organic solvents such as carbonic acid esters [e.g. ethylene carbonate (EC), diethylene carbonate (DEC), dimehtyl carbonate (DMC) and propylene carbonate (PC)], γ-butyrolactone, tetrahydrofuran, acetonitrile and the like, at least one kind of electrolyte selected from lithium fluoride compounds (e.g. LiPF₆ and LiBF₄), lithium halides (e.g. LiClO₄), etc.

When the positive electrode active material of the present invention is used, the resulting positive electrode active material layer has a low resistance as shown in Example which follows, making it unnecessary to increase the amount of conductivity-improving agent added and further making it possible to increase the amount of positive electrode active material used. This advantage is striking in a battery having a capacity of 2 Ah or more, i.e. a battery in which a positive electrode active material is filled in a relatively large amount. Further, use of the positive electrode active material of the present invention gives a battery superior in repeated cycle (repeated charge-discharge) property. For these merits, the lithium secondary battery of the present invention is suitably used as an electric source for driving the motor of EV or HEV.

The present invention is described in more detail below by way of Example. However, the present invention is in no way restricted to the Example.

### [Preparation of positive electrode active materials]

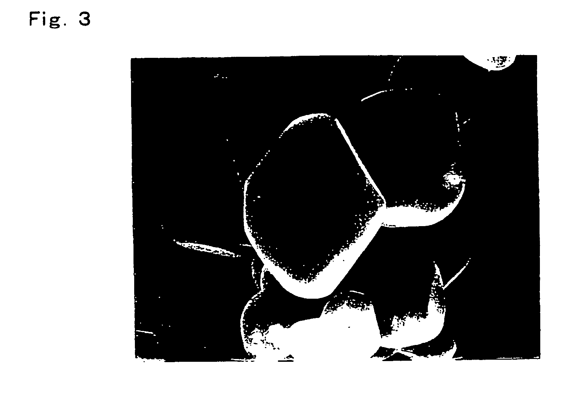

A positive electrode active material of Example was produced by weighing and mixing starting materials, i.e. commercial powders of Li₂CO₃, MnO₂, TiO₂ and NiO so as to give a composition of Example shown in Table 1 and then firing the resulting mixture in an oxidizing atmosphere at 800°C for 24 hours. The positive electrode active material produced consisted of primary particles having a substantially octahedral shape as shown in Fig. 1. As the positive electrode active material of Comparative Example 1, commercially available LiMn₂O₄ was used. The particle structure (fine structure) thereof was amorphous secondary particles formed by cohesion of primary particles of about 0.2 µm in size, as shown in a SEM photography of Fig. 2. For Comparative Example 2, there was used a positive electrode active material obtained by weighing and mixing starting materials, i.e. commercial powders of Li₂CO₃, MnO₂ and B₂O₃ so as to give a molar ratio of Li:Mn:B = 1:2:0.03 and then firing the resulting mixture in an oxidizing atmosphere at 800°C for 24 hours. The particle structure (fine structure) of the positive electrode active material of Comparative Example 2 was, as shown in a SEM photograph of Fig. 3, a deformed and overall roundish octahedral shape wherein the flat crystal face of octahedron remained partially but the edges or apexes had a curved surface.

**Table 1**

| | Composition of positive electrode active material | Internal resistance (%) | Capacity retention (%) |
|---|---|---|---|
| Example | Li(Ni_{0.5}Ti_{0.5})_{0.15}Mn_{1.85}O₄ | 36 | 86 |
| Comparative Example 1 | LiMn₂O₄ | 100 | 63 |
| Comparative Example 2 | 0.03 B₂O₃-added LiMn₂O₄ | 23 | 47 |

### [Production of cells (coin cells)]

Each of the positive electrode active materials prepared above was mixed with acetylene black (an conductivity agent) and a polyvinylidene fluoride (PVDF) (a binder) at a weight ratio of 50:2:3, whereby three kinds of positive electrode materials were produced. 0.02 g of each positive electrode material was press-molded at a pressure of 300 kg/cm² into a disc of 20 mm in diameter, whereby three kinds of positive electrodes were produced. Then, three kinds of coin cells were produced using (a) one of the above-produced positive electrodes, (b) an electrolyte solution obtained by dissolving LiPF₆ (an electrolyte) in an organic solvent (an equal-volume mixture of EC and DEC) in a concentration of 1 mole/liter, (c) a negative electrode made of carbon and (d) a separator for separation of the positive electrode (a) and the negative electrode (c).

### [Internal resistances of coin cells]

Each of the coin cells produced above was subjected to one cycle of charge and discharge. That is, the coin cell was charged to 4.1 V at a constant current of 1 C rate and charged at a constant voltage at 4.1V and then discharged to 2.5 V at a constant current of 1 C rate. A voltage difference between the voltage at the completion of charge and the voltage right after the start of discharge was divided by the discharge current, to determine the internal resistance of each coin cell. The internal resistance of each coin cell was divided by the internal resistance of the coin cell produced using the positive electrode active material of Comparative Example 1, and the value obtained was defined as the "internal resistance (%)" of the coin cell. (Naturally, the internal resistance (%) is 100 % in Comparative Example 1.) The results are shown in Table 1. The internal resistance is very low in Example and Comparative Example 2. (The internal resistance is strikingly low in Comparative Example 2, but Comparative Example 2 gives an inferior result in repeated cycle test described below.)

### [Repeated cycle properties of coin cells]

In order to examine the repeated cycle property, each coin cell was subjected to a repeated cycle test of repeating a cycle consisting of charging the coin cell to 4.1 V at a constant current of 1 C rate and at a constant voltage at 4.1V and then discharging the charged coin cell to 2.5 V at a constant current of 1 C rate. The cycle was repeated 100 times. The discharge capacity of the coin cell after the completion of 100 cycles was divided by the initial discharge capacity of the coin cell and the value obtained was defined as "capacity retention (%)". The value is shown in Table 1. (As the capacity retention (%) of a cell is larger, the discharge capacity reduction of the cell is smaller.) A high capacity retention of 86% was obtained in Example. In Comparative Example 2 which gave a small internal resistance (%), the capacity retention (%) was small and there is a problem in using such a cell as a secondary battery which is subjected to repeated charge and discharge.

As is clear from the comparison of Example and Comparative Examples 1 and 2, the morphology of the primary particles of positive electrode active material has a large influence on the internal resistance and repeated cycle property of cell. As is clear from the comparison of Example and Comparative Example 2, the morphology of the primary particles of positive electrode active material can be varied by varying the composition of the positive electrode active material even though the same synthesis conditions are employed. Thus, the morphology of the primary articles of positive electrode active material is an important parameter for achieving low internal resistance and good repeated cycle property. Needless to say, the composition and firing conditions employed for the positive electrode active material of Example are only an example for obtaining a desired morphology of primary particles, and the present invention is not restricted to such composition and firing conditions.

### [Production of batteries using wound-type internal electrode body and evaluation of the batteries]

Using the positive electrode active material of Example or Comparative Example 1, a battery having a wound-type internal electrode body was produced according to the following procedure. To the positive electrode active material was added a predetermined amount of acetylene black. The mixture was dispersed in a solution of a PVDF dissolved in n-methylpyrrolidone (NMP), to obtain a slurry. The slurry was coated on the both sides of an aluminum foil of 20 µm in thickness, 3,600 mm in length and 200 mm in width by the use of a roll coater, after which the coating thickness was adjusted to 100 µm at each side by roll-pressing, to produce two kinds of positive electrode plates.

Meanwhile, a negative electrode plate was produced by adding a required amount of a highly graphitized carbon fiber as a negative electrode active material to a solution of a PVDF dissolved in NMP, to prepare a slurry, coating the slurry on the both sides of a copper foil of 10 µm in thickness, 4,000 mm in length and 200 mm in width, and adjusting the coating thickness to 80 µm at each side.

The thus-produced positive electrode plate and negative electrode plate were wound via a three-layered microporous separator (thickness: 25 µm, length: 4,500 mm, width: 220 mm) obtained by interposing a PE film between two same PP films, so that the two electrodes make no direct contact with each other; simultaneously therewith, tabs for current collection were fitted to each electrode plate by ultrasonic welding; thereby, a wound-type internal electrode body was produced. The internal electrode body was placed in a battery case; the battery case inside was filled with an electrolyte solution obtained by dissolving an electrolyte (LiPF₆) in a mixed solvent of EC and DEC; the battery case was sealed; thereby, two kinds of batteries of 50 mm in outer diameter and 240 mm in length were produced.

The two batteries were charged to a full-charge condition at a 10-A constant current at a 4.1-V constant voltage. The battery capacity at full-charge condition was 22 Ah (Example) and 25 Ah (Comparative Example 1). The two batteries were measured for internal resistance (%) and capacity retention (%) in the same manner as for the coin cells (however, a rate of 0.2 C was used for charge and discharge). The results were similar to those obtained for the coin cells.

As described above, significant reduction in internal resistance and good repeated cycle property are obtained in the lithium secondary battery of the present invention using a positive electrode active material constituted by primary particles having a morphology of substantially octahedral shape. As a result, the amount of conductivity-improving agent need not be increased and the amount of positive electrode active material can be increased, whereby a large battery capacity and a large energy density can be achieved.

A lithium secondary battery includes a positive electrode active material which is composed mainly of Li and Mn and has a cubic spinel structure, the primary particles of the positive electrode active material having a substantially octahedral shape mainly constituted by flat crystal faces having the morphology as defined in claim 1. In this lithium secondary battery, the morphology of the particles constituting the positive electrode active material is controlled; thereby, the resistance of the positive electrode active material and accordingly the internal resistance of the battery are lowered; as a result, discharge in large current has been made possible.

## Claims

1. A lithium secondary battery comprising:
a positive electrode active material which is composed mainly of Li and Mn and has a cubic spinel structure, wherein the primary particles of the positive electrode active material mostly have a substantially octahedral shape constituted mainly by flat crystal faces wherein the primary particles have an average particle diameter of 1 to 20 µm, and wherein substantially octahedral shape means any one of the following particle shapes (a) to (e):
(a) particles wherein flat crystal faces intersect with each other at the surface of each primary particle to form clear edge lines, and each primary particle has a shape close to the octahedron of cubic spinel structure,
(b) particles wherein the apex formed by intersection of four crystal faces of octahedron is not complete and is formed in the form of a plane or an edge,
(c) particles wherein a different crystal face is formed at the edge formed by intersection of two crystal faces of octahedron,
(d) particles wherein one crystal face is jointly owned by two primary particles or wherein other primary particle grows from the surface of one primary particle, and each primary particle has a shape close to the octahedron of cubic spinel structure and
(e) polyhedrons formed by partial chipping of the above shapes (a) to (e) or by joint possession of crystal face in complicated manner between two primary particles;
and wherein the substantially octahedral shape does not include primary particles having a deformed and overall roundish octahedral shape wherein the flat crystal face of octahedron remained partially but the edges or apexes had a curved surface,
and wherein the positive electrode active material is obtainable by firing a raw material mixture consisting of given proportions of salts and/or oxides of various elements including Li and Mn, in an oxidizing atmosphere at 700 to 900°C for 5 to 500 hours.

2. A lithium secondary battery according to claim 1, wherein at least one side of each flat crystal face has a length of 1 µm or more.

3. A lithium secondary battery according to claim 1 or 2, wherein the positive electrode active material has a Li/Mn ratio of larger than 0.5.

4. A lithium secondary battery according to any of claims 1 to 3, wherein the primary particles form secondary particles having the maximum particle diameter of 50 µm or less.

5. A lithium secondary battery according to any of claims 1 to 4, which has a capacity of 2 Ah or more.

6. A lithium secondary battery according to any of claims 1 to 5, which is used in an electric vehicle or a hybrid electric vehicle.

## Patentansprüche

1. Lithium-Sekundärbatterie, umfassend:
ein aktives Material der positiven Elektrode, das hauptsächlich aus Li und Mn besteht und eine kubische Spinellstruktur aufweist, wobei die Primärteilchen des aktiven Materials der positiven Elektrode größtenteils eine im wesentlichen oktaedrische Gestalt aufweisen, die hauptsächlich von ebenen Kristallflächen ausgebildet wird, wobei die Primärteilchen einen mittleren Teilchendurchmesser von 1 bis 20 µm aufweisen, und wobei mit der im wesentlichen oktaedrischen Gestalt eine der nachstehenden Teilchengestalten (a) bis (e) gemeint ist:
(a) Teilchen, in denen ebene Kristallflächen einander an der Oberfläche eines jeden Primärteilchens schneiden und klare Kantenlinien ausbilden, und jedes Primärteilchen eine Gestalt aufweist, die einem Oktaeder einer kubischen Spinellstruktur nahe kommt,
(b) Teilchen, in denen die Spitze, die durch das Sich-Schneiden von vier Kristallflächen des Oktaeders gebildet wird, nicht vollständig und in Form einer Ebene oder einer Kante ausgebildet ist,
(c) Teilchen, in denen an der Kante, die durch das Sich-Schneiden von zwei Kristallflächen des Oktaeders gebildet wird, eine unterschiedliche Kristallfläche ausgebildet wird,
(d) Teilchen, in denen zwei Primärteilchen eine gemeinsame Kristallfläche besitzen, oder in denen andere Primärteilchen aus der Oberfläche eines Primärteilchens herauswachsen, und jedes Primärteilchen eine Gestalt aufweist, die einem Oktaeder einer kubischen Spinellstruktur nahe kommt, und
(e) Polyeder, die durch ein teilweises Abschneiden der vorstehenden Gestalten (a) bis (e) oder den gemeinsamen Besitz von Kristallflächen auf komplizierte Art und Weise durch zwei Primärteilchen gebildet werden;
und worin die im wesentlichen oktaedrische Gestalt keine Primärteilchen mit einer deformierten und insgesamt rundlichen oktaedrischen Gestalt, in der die ebene Kristallfläche des Oktaeders teilweise erhalten geblieben ist, aber die Kanten oder Spitzen eine gekrümmte Oberfläche aufweisen, einschließt,
und worin das aktive Material der positiven Elektrode durch das 5 bis 500 Stunden lange Brennen einer Ausgangsmaterial-Mischung, die aus vorgegebenen Anteilen von Salzen und/oder Oxiden verschiedener Elemente besteht, die Li und Mn einschließen, in einer oxidierenden Atmosphäre bei 700 °C bis 900 °C erhalten werden kann.

2. Lithium-Sekundärbatterie nach Anspruch 1, in der mindestens eine Seite einer jeden ebenen Kristallfläche eine Länge von 1 µm oder mehr aufweist.

3. Lithium-Sekundärbatterie nach Anspruch 1 oder Anspruch 2, in der das aktive Material der positiven Elektrode ein Li/Mn-Verhältnis von größer 0,5 aufweist.

4. Lithium-Sekundärbatterie nach einem der Ansprüche 1 bis 3, in der die Primärteilchen Sekundärteilchen mit einem maximalen Teilchendurchmesser von 50 µm oder weniger bilden.

5. Lithium-Sekundärbatterie nach einem der Ansprüche 1 bis 4, die eine Kapazität von 2 Ah oder mehr aufweist.

6. Lithium-Sekundärbatterie nach einem der Ansprüche 1 bis 5, die in einem Elektrofahrzeug oder einem Hybridelektrofahrzeug verwendet wird.

## Revendications

1. Batterie secondaire au lithium comprenant :
un matériau actif d'électrode positive qui est composé principalement de Li et Mn et a une structure de spinelle cubique, dans laquelle les particules primaires du matériau actif d'électrode positive ont pratiquement une forme sensiblement octaédrique constituée principalement de faces de cristal plates dans laquelle les particules primaires ont un diamètre moyen de particule de 1 à 20 µm, et dans laquelle une forme sensiblement octaédrique désigne l'une quelconque des formes de particule suivantes (a) à (e) :
(a) des particules dans lesquelles des faces de cristal plates se coupent mutuellement à la surface de chaque particule primaire pour former des lignes de bord nettes, et chaque particule primaire a une forme proche de l'octaèdre de structure de spinelle cubique,
(b) des particules dans lesquelles le sommet formé par l'intersection de quatre faces de cristal d'octaèdre n'est pas complet et est formé sous la forme d'un plan ou d'un bord,
(c) des particules dans lesquelles une face de cristal différente est formée au bord formé par l'intersection de deux faces de cristal d'octaèdre,
(d) des particules dans lesquelles une face de cristal appartient en commun à deux particules primaires ou dans lesquelles une autre particule primaire croît depuis la surface d'une particule primaire, et chaque particule primaire a une forme proche de l'octaèdre d'une structure de spinelle cubique et
(e) des polyèdres formés par ébréchure partielle des formes (a) à (d) ci-dessus ou par possession commune d'une face de cristal de manière compliquée par deux particules primaires ;
et dans laquelle la forme sensiblement octaédrique ne comprend pas des particules primaires ayant une forme octaédrique déformée et globalement arrondie dans laquelle la face de cristal plate d'octaèdre persiste partiellement mais les bords ou sommets ont une surface courbe,
et dans laquelle le matériau actif d'électrode positive peut être obtenu par cuisson d'un mélange de matériaux de départ consistant en des proportions données de sels et/ou d'oxydes de différents éléments comprenant Li et Mn, dans une atmosphère oxydante entre 700 et 900°C pendant 5 à 500 heures.

2. Batterie secondaire au lithium selon la revendication 1, dans laquelle au moins un côté de chaque face de cristal plate a une longueur de 1 µm ou plus.

3. Batterie secondaire au lithium selon la revendication 1 ou 2, dans laquelle le matériau actif d'électrode positive a un rapport Li/Mn supérieur à 0,5.

4. Batterie secondaire au lithium selon l'une quelconque des revendications 1 à 3, dans laquelle les particules primaires forment des particules secondaires ayant un diamètre de particule maximal de 50 µm ou moins.

5. Batterie secondaire au lithium selon l'une quelconque des revendications 1 à 4, qui a une capacité de 2 Ah ou plus.

6. Batterie secondaire au lithium selon l'une quelconque des revendications 1 à 5, qui est utilisée dans un véhicule électrique ou un véhicule électrique hybride.
